(19) Europäisches Patentamt
European Patent Office
Office européen des brevets

(11) **EP 2 600 213 B1**

(12) **FASCICULE DE BREVET EUROPEEN**

(45) Date de publication et mention de la délivrance du brevet:
**14.05.2014   Bulletin 2014/20**

(51) Int Cl.:
***G03H 1/00*** *(2006.01)*   *G03H 1/08* *(2006.01)*

(21) Numéro de dépôt: **12194551.3**

(22) Date de dépôt: **28.11.2012**

(54) **Procédé de formation d'un hologramme synthétique dans une image tramée**

Verfahren zur Erstellung eines synthetischen Hologramms in einem Rasterbild

Method of forming a synthetic hologram in a raster image

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **29.11.2011   FR 1160915**

(43) Date de publication de la demande:
**05.06.2013   Bulletin 2013/23**

(73) Titulaire: **COMMISSARIAT A L'ENERGIE ATOMIQUE ET AUX ENERGIES ALTERNATIVES**
**75015 Paris (FR)**

(72) Inventeur: **MARTINEZ, Christophe**
**38100 GRENOBLE (FR)**

(74) Mandataire: **de Beaumont, Michel**
**Cabinet Beaumont**
**1, rue Champollion**
**38000 Grenoble (FR)**

(56) Documents cités:
**US-A1- 2005 093 856**

• **ROSEN J ET AL: "HIDDEN IMAGES IN HALFTONE PICTURES", APPLIED OPTICS, OPTICAL SOCIETY OF AMERICA, WASHINGTON, DC; US, vol. 40, no. 20, 10 juillet 2001 (2001-07-10), pages 3346-3353, XP001081102, ISSN: 0003-6935, DOI: 10.1364/AO.40.003346**

## Description

Domaine de l'invention

La présente invention concerne un procédé d'intégration d'un hologramme synthétique dans une image visible. Plus particulièrement, la présente invention concerne un procédé d'intégration d'un hologramme synthétique par codage d'ouvertures dans une image tramée dont le rendu visuel est en niveaux de gris.

Exposé de l'art antérieur

Dans de nombreux secteurs, notamment dans l'industrie du luxe (par exemple la parfumerie, la bijouterie ou la maroquinerie), ou dans le domaine de médicament, la lutte contre la copie de produits de marque est une préoccupation quotidienne. De nombreux procédés et dispositifs sont actuellement utilisés pour tenter de garantir l'authenticité des produits de marque.

Parmi ces techniques, il a été proposé de reporter, sur les produits à identifier, des puces transparentes sur lesquelles sont formés des hologrammes. De tels hologrammes sont obtenus à partir d'une image visible, retrouvée à la lecture de l'hologramme. La présence de l'hologramme est difficilement détectable à l'oeil nu, et sa lecture directe sans dispositif de lecture adapté ne permet pas d'identifier l'image visible source de l'hologramme.

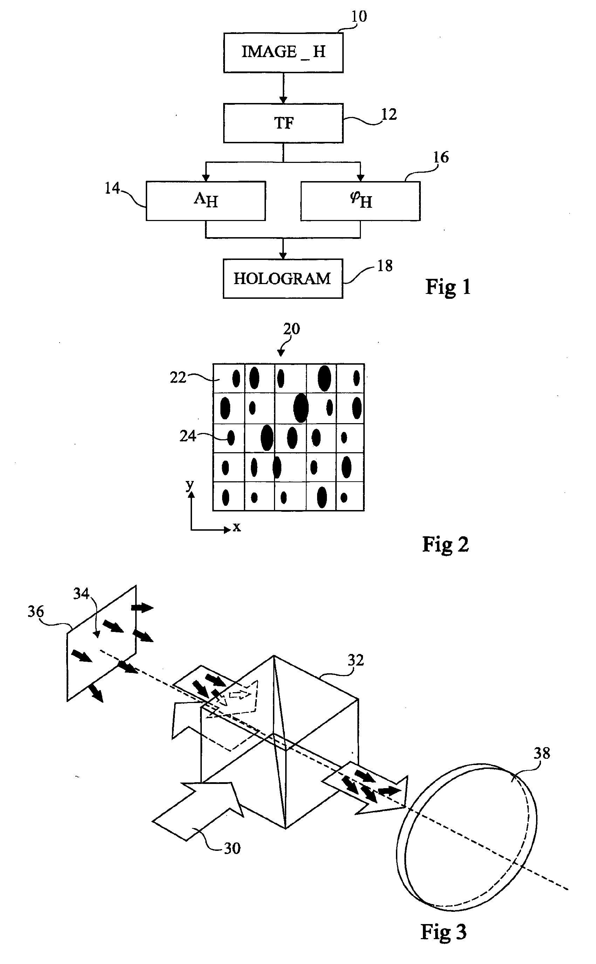

La figure 1 est un organigramme illustrant un procédé de formation d'un hologramme. La figure 2 illustre un exemple de rendu obtenu à l'aide du procédé de formation d'hologramme de la figure 1 dans le cas d'un hologramme synthétique par codage d'ouvertures.

En figure 1, on part d'une image source de l'hologramme 10 (IMAGE_H) dont on calcule, à une étape 12, la transformée de Fourier. Le calcul de cette transformée de Fourier permet d'obtenir une image d'amplitude de la transformée de Fourier 14 ($A_H$) et une image de phase de la transformée de Fourier 16 ($\varphi_H$). Les images d'amplitude 14 et de phase 16 sont ensuite combinées dans une nouvelle image qui correspond à l'hologramme fini (étape 18, HOLOGRAM). Différentes combinaisons des images d'amplitude 14 et de phase 16 sont possibles, l'idée étant que l'éclairement de l'hologramme avec un faisceau adapté, combiné à une optique réalisant une transformée de Fourier inverse, permet de lire l'image source de l'hologramme 10 (IMAGE H).

L'hologramme 18 est constitué de nombreux pixels dont la forme est définie par les pixels correspondants des images obtenues par le calcul de la transformée de Fourier 12. L'hologramme 18 présente ainsi une résolution identique à celle de l'image initiale 10.

La figure 2 illustre un exemple d'hologramme obtenu par le procédé de la figure 1, cet hologramme étant un hologramme synthétique par codage d'ouvertures, encore appelé hologramme synthétique à détour de phase. En figure 2 est illustrée une portion d'hologramme constituée de 5x5 pixels. Un repère (x, y) est utilisé pour identifier chaque pixel. Chaque pixel 22 comprend une zone sombre centrale 24, en forme d'ellipse, le fond du pixel étant clair. Le centre de la zone 24 est aligné, dans chaque pixel 22, sur le centre du pixel selon l'axe y.

La taille de la zone sombre 24 dans chaque pixel dépend du résultat du calcul de l'image d'amplitude 14 de la transformée de Fourier 12 de l'image source IMAGE_H pour le pixel de mêmes coordonnées. Des zones 24 de tailles plus ou moins importantes sont donc prévues dans l'hologramme.

En outre, le décalage du centre de chaque zone 24 par rapport au centre du pixel selon l'axe x dépend de la valeur du pixel de mêmes coordonnées de l'image de phase 16 ($\varphi_H$).

On notera que différents procédés de définition d'hologramme par codage d'ouvertures sont connus. Par exemple, la forme des zones 24 dans les pixels 22 peut différer de la forme elliptique proposée ici. Notamment, il a été proposé de former des zones 24 rectangulaires, de taille plus ou moins importante en fonction de l'image d'amplitude 14, et décalées plus ou moins du centre du pixel en fonction de l'image de phase 16 (selon l'axe x).

La figure 3 illustre un dispositif de lecture d'un hologramme synthétique tel que celui de la figure 2, obtenu par un procédé tel que celui de la figure 1. En figure 3, le dispositif de lecture est un dispositif en réflexion. On notera qu'il existe des dispositifs de lecture similaires en transmission. Un faisceau lumineux 30 est transmis, par exemple par un cube séparateur de faisceau 32, en direction d'un hologramme 34 (non représenté en détail) formé sur une puce 36. Les pixels de l'hologramme 34 réfléchissent le faisceau lumineux.

Le faisceau réfléchi par l'hologramme repasse dans le cube séparateur de faisceau 32 puis est combiné par une lentille 38 dont la fonction est de réaliser une transformée de Fourier inverse des rayons reçus de façon à afficher une image sur un dispositif d'affichage (non représenté) placé au point focal de la lentille.

On notera que, si un codage par clef de phase de l'hologramme est prévu à la formation de l'hologramme, une lame de phase similaire à la clef de phase doit être placée dans le dispositif de lecture de la figure 3 pour réaliser la lecture de l'hologramme.

Des techniques d'intégration d'hologrammes dans une image ont été proposées. La publication de Joseph Rosen et Bahram Javidi intitulée "Hidden images in halftone pictures", Appl. Opt. 40, No. 20, 3346-3353, présente l'une de ces techniques.

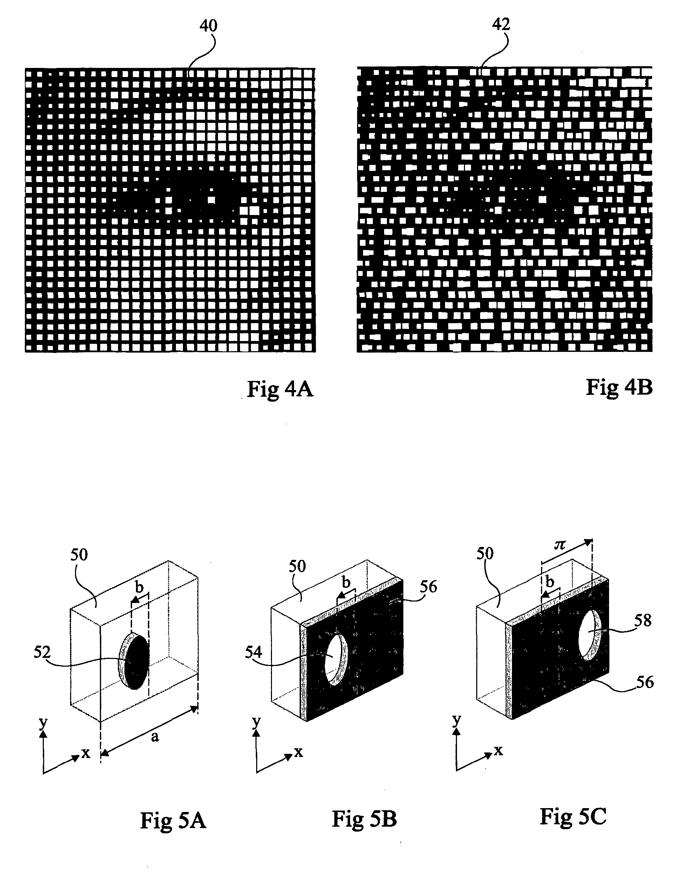

Les figures 4A et 4B illustrent, respectivement, une première image 40 dont le rendu visuel est un rendu en niveaux de gris et une deuxième image 42, issue de la première image, dans laquelle un hologramme synthétique par codage d'ouvertures est intégré. La deuxième image est obtenue par le procédé décrit dans la publication ci-dessus.

La figure 4A est une image obtenue par tramage d'une image en niveaux de gris. Le procédé de tramage, couramment utilisé par exemple dans les procédés d'impression, consiste à associer, à chaque teinte d'un pixel initial en niveaux de gris, un pixel comprenant une zone centrale blanche dans un fond noir (ou l'inverse), la zone centrale étant plus ou moins grande en fonction de la teinte du pixel équivalent de l'image en niveaux de gris. Visuellement, et si l'on s'éloigne de l'image, l'image tramée et l'image en niveaux de gris apparaissent identiques.

On notera que les techniques de tramage sont généralement réalisées avec une résolution assez importante pour que, à l'oeil nu, la trame n'apparaisse pas.

L'image 42 de la figure 4B est obtenue à partir de l'image 40 de la figure 4A et intègre un hologramme synthétique. Dans l'image 42, l'hologramme est intégré en modifiant la taille et l'alignement des zones centrales des différents pixels, en fonction de l'hologramme à intégrer.

Une lecture de l'image de la figure 4B, par exemple à l'aide du dispositif de la figure 3, associé par exemple à un filtre, permet d'obtenir l'image source utilisée pour former l'hologramme.

Des inconvénients de la technique mentionnée ci-dessus apparaissent en figure 4B : en effet, on voit dans cette figure que certaines zones claires décalées se superposent à d'autres zones claires de pixels voisins. Cette superposition implique une perte d'information importante, qui n'est pas désirée.

La lecture de l'hologramme codé se trouve donc particulièrement dégradée par cette intégration. En outre, la technique ci-dessus implique un mauvais contraste en niveaux de gris et des contraintes importantes au niveau du codage de phase.

<u>Résumé</u>

Un objet d'un mode de réalisation de la présente invention est de prévoir un procédé palliant tout ou partie des inconvénients des techniques d'intégration d'hologrammes dans des images de l'art antérieur.

Plus particulièrement, un objet d'un mode de réalisation de la présente invention est de prévoir un procédé permettant d'intégrer un hologramme dans une image en niveaux de gris dont la lecture directe est de bonne qualité.

Ainsi, un mode de réalisation de la présente invention prévoit un procédé d'intégration d'un hologramme synthétique dans une image directement observable d'une scène, comprenant les étapes suivantes : définir une première image de la scène, comprenant des pixels en niveaux de gris ; fabriquer des première et deuxième matrices à partir de la première image, la première matrice comprenant des pixels d'une première et d'une deuxième teinte selon que le pixel correspondant de la première image a un niveau de gris inférieur ou supérieur à un seuil, chaque élément de la deuxième matrice comprenant une valeur égale à l'écart de niveau de gris entre le pixel correspondant de la première image et le pixel correspondant de la première matrice ; fabriquer une troisième matrice de pixels en calculant l'image de phase de la transformée de Fourier d'une image issue d'une deuxième image source de l'hologramme ; fabriquer une quatrième matrice de pixels, chaque pixel de la quatrième matrice comprenant une zone centrale dont la surface est déterminée à partir de l'élément correspondant de la deuxième matrice et dont un décalage par rapport au centre du pixel est issu du pixel correspondant de la troisième matrice ; et réaliser une lithographie d'une couche opaque en surface d'une plaquette selon le motif défini par la quatrième matrice de pixels, la lithographie étant prévue pour éliminer, dans un pixel, la couche opaque à l'intérieur de la zone centrale si le pixel équivalent de la première matrice est de la première teinte et pour éliminer la couche opaque à l'extérieur de la zone centrale si le pixel équivalent de la première matrice est de la deuxième teinte.

Selon un mode de réalisation de la présente invention, la taille de la zone centrale de chacun des pixels de la quatrième matrice est calculée à partir de la valeur du pixel correspondant d'une cinquième matrice de pixels, chaque pixel de la cinquième matrice étant obtenu par calcul de l'amplitude diffractée d'une ouverture définie dans un pixel, le rapport entre la surface de l'ouverture et la surface du pixel étant égal à la valeur de l'élément correspondant de la deuxième matrice.

Selon un mode de réalisation de la présente invention, l'amplitude $A^h_{nm}$ d'un pixel de la cinquième matrice (IMAGE_$G_A$) est liée à la valeur $I_{nm}$ de l'élément correspondant de la deuxième matrice par la relation suivante :

$$A^h_{nm} = \sqrt{\frac{I_{nm}}{2}} \cdot J_1(\sqrt{8 I_{nm}})$$

$J_1$ étant la première fonction de Bessel.

Selon un mode de réalisation de la présente invention, la troisième matrice est obtenue en réalisant les étapes suivantes : (a) calculer une sixième matrice d'amplitude obtenue à partir de la deuxième image source de l'hologramme en réalisant les mêmes étapes que celles permettant d'obtenir la cinquième matrice à partir de la deuxième matrice ; (b) combiner les pixels de la sixième matrice d'amplitude à une distribution de phase aléatoire ou à une composante continue pour obtenir une valeur complexe ; et (c) calculer l'image de phase de la transformée de Fourier de la valeur complexe.

Selon un mode de réalisation de la présente invention, la troisième matrice est obtenue par un procédé d'optimisation tirant profit de la cinquième matrice.

Selon un mode de réalisation de la présente invention, le procédé d'optimisation consiste à : (a) calculer une sixième matrice d'amplitude obtenue à partir de la deuxième image source de l'hologramme en réalisant les mêmes étapes que celles permettant d'obtenir la cinquième matrice à partir de la deuxième matrice ; (b) combiner les pixels de la sixième matrice d'amplitude à une distribution de phase aléatoire ou à une composante de phase continue pour obtenir une première valeur complexe ; (c) calculer la transformée de Fourier de la première valeur complexe ; (d) combiner les pixels de la cinquième matrice de pixels et les pixels de l'image de phase issue de la transformée de Fourier de l'étape (c) pour obtenir une deuxième valeur complexe ; (e) calculer la transformée de Fourier inverse de la deuxième valeur complexe ; (f) combiner les pixels de la sixième matrice d'amplitude aux pixels de l'image de phase issue du calcul de l'étape (e) pour obtenir une nouvelle première valeur complexe ; (g) réitérer l'étape (c) pour calculer la transformée de Fourier de la nouvelle première valeur complexe, la troisième matrice correspondant à l'image de phase obtenue de cette dernière transformée de Fourier.

Selon un mode de réalisation de la présente invention, le procédé d'optimisation comprend en outre la réitération des étapes (d) à (g), la troisième matrice correspondant à l'image de phase obtenue à l'étape (g) après plusieurs cycles de réitération des étapes (d) à (g).

Selon un mode de réalisation de la présente invention, au moins trois cycles sont réalisés.

Selon un mode de réalisation de la présente invention, le décalage de la zone centrale par rapport au centre du pixel de chaque pixel de la quatrième matrice est directement proportionnel de la valeur du pixel correspondant de la troisième matrice.

Selon un mode de réalisation de la présente invention, le seuil de niveau de gris est égal à 0,5, à 10 % près, sur une échelle normalisée de niveaux de gris.

Selon un mode de réalisation de la présente invention, la zone centrale de chaque pixel de la quatrième matrice est elliptique.

Selon un mode de réalisation de la présente invention, le rapport de forme de la zone centrale elliptique de chaque pixel de la quatrième matrice est égal à n/2.

Selon un mode de réalisation de la présente invention, la première teinte de la première matrice est une teinte minimum, la deuxième teinte de la première matrice est une teinte maximum, la lithographie étant prévue pour éliminer la couche opaque à l'intérieur de la zone centrale d'un pixel si le pixel équivalent de la première matrice est de la première teinte, et pour éliminer la couche opaque à l'extérieur de la zone centrale d'un pixel si le pixel équivalent de la première matrice est de la deuxième teinte.

Selon un mode de réalisation de la présente invention, une taille minimum de la zone centrale des pixels de la quatrième matrice est imposée.

Selon un mode de réalisation de la présente invention, la taille minimum de la zone centrale des pixels de la quatrième matrice correspond à un niveau de gris de 0,02 pour les tons sombres des pixels et à 0,98 pour les tons clairs des pixels, sur une échelle normalisée de niveaux de gris.

Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :

la figure 1, précédemment décrite, est un organigramme illustrant un procédé de formation d'hologrammes synthétiques par codage d'ouvertures connu ;
la figure 2 illustre un exemple de résultat obtenu à l'aide du procédé de la figure 1 ;
la figure 3 illustre un dispositif de lecture d'un hologramme tel que celui de la figure 2, obtenu par exemple par un procédé tel que celui de la figure 1 ;
les figures 4A et 4B, précédemment décrites, illustrent respectivement une image tramée et une image issue de l'image de la figure 4A dans laquelle un hologramme est intégré ;
les figures 5A à 5C illustrent une technique de formation de pixels par codage d'ouvertures équivalents en termes de diffraction ;
la figure 6 est un organigramme illustrant un procédé selon un mode de réalisation de la présente invention ;

la figure 7 illustre des résultats d'étapes du procédé de la figure 6 ;

la figure 8 illustre une courbe de la valeur d'éléments d'une matrice issue d'une image initiale en niveaux de gris obtenue selon une étape d'un mode de réalisation de la présente invention ;

la figure 9 est une vue en perspective d'un pixel d'un hologramme selon un mode de réalisation de la présente invention ;

la figure 10 est une courbe de l'amplitude de la trame holographique en fonction du niveau de gris d'un pixel tramé ;

la figure 11 est un organigramme illustrant un procédé selon une variante d'un mode de réalisation de la présente invention ;

les figures 12A à 12D illustrent des résultats de lecture obtenus à partir d'hologrammes intégrés dans des images visibles formées par le procédé des figures 6 et 11, en fonction du nombre d'itérations de ce procédé ;

la figure 13 illustre un résultat du procédé selon un mode de réalisation de la présente invention ;

les figures 14A à 14D illustrent des résultats obtenus en réalisant des variantes d'un procédé selon un mode de réalisation de la présente invention ;

la figure 15 illustre une variante d'un procédé selon un mode de réalisation de la présente invention ;

les figures 16A à 16C illustrent des résultats obtenus en réalisant des variantes d'un procédé selon un mode de réalisation de la présente invention ; et

les figures 17A à 17D, 18 et 19 illustrent des applications d'un procédé selon un mode de réalisation de la présente invention.

Par souci de clarté, de mêmes éléments ont été désignés par de mêmes références aux différentes figures.

<u>Description détaillée</u>

Les figures 5A à 5C illustrent une propriété d'équivalence de pixels d'un hologramme synthétique par codage d'ouvertures dont on prévoit de tirer profit pour intégrer un hologramme dans une image en niveaux de gris.

Ces trois figures montrent, en trois dimensions, une portion d'une plaquette transparente 50 dont la surface définit un pixel d'un hologramme synthétique par codage d'ouvertures. Le pixel représenté présente une largeur "a".

Dans l'exemple de la figure 5A, le pixel considéré comprend une zone opaque centrale 52, de forme elliptique, sur un fond transparent. En pratique, la zone opaque peut être formée sur la plaquette 50 en déposant, sur l'ensemble de cette plaquette 50, une couche opaque (absorbante ou réfléchissante), par exemple en oxyde de platine (PtO$_x$), que l'on vient graver par exemple par lithographie de façon à définir la zone centrale 52.

Dans l'exemple représenté en figure 5A, le centre de la zone opaque 52 est décalé du centre du pixel d'une distance b vers la gauche (selon l'axe x). Comme nous l'avons vu précédemment, le décalage b est lié au pixel correspondant de l'image de phase de la transformée de Fourier de l'image source de l'hologramme. La taille de la zone opaque 52, quant à elle, est image du pixel correspondant de l'image d'amplitude de la transformée de Fourier de l'image source de l'hologramme.

La forme elliptique proposée ici présente l'intérêt d'être, lorsqu'elle est utilisée pour former des pixels d'une image obtenue par tramage d'une image en niveaux de gris, relativement douce à l'oeil. En particulier, cette forme est beaucoup plus agréable à l'oeil que les formes rectangulaires des figures 4A et 4B.

La figure 5B illustre un pixel complémentaire du pixel de la figure 5A. Dans ce pixel, les régions opaques et transparentes du pixel sont inversées par rapport au pixel de la figure 5A, c'est-à-dire que la zone 54, de même surface que la zone 52 de la figure 5A, est transparente et le reste de la surface du pixel est recouvert d'une portion opaque 56.

Le pixel de la figure 5C est obtenu à partir du pixel de la figure 5B et comprend un fond opaque 56 dans lequel est définie une zone transparente 58. La zone transparente 58 est de même taille que la zone 54. La zone 58 est décalée par rapport à la zone transparente 54, selon l'axe x vers la droite, de telle façon que le déphasage équivalent entre les zones 54 et 58 soit un déphasage de π (en relation avec l'image de phase de l'hologramme). En pratique, un tel déphasage peut être obtenu en décalant la zone 58 par rapport à la zone 54 d'une distance égale à a/2.

Conformément aux principes des écrans complémentaires de Babinet, le pixel de la figure 5A est équivalent, en ce qui concerne le motif de diffraction qu'il implique lorsqu'il est éclairé, au pixel complémentaire et déphasé de la figure 5C. Compte tenu de cette propriété, l'idée est de proposer un procédé d'intégration d'un hologramme dans une image tramée présentant un rendu en niveaux de gris, dans lequel les cellules les plus foncées de l'image en niveaux de gris sont constituées non pas d'une zone centrale opaque de taille importante sur un fond transparent, mais d'une zone centrale transparente de petite taille sur un fond opaque (équivalente). La zone centrale est ensuite déphasée pour intégrer l'hologramme, comme on le verra par la suite.

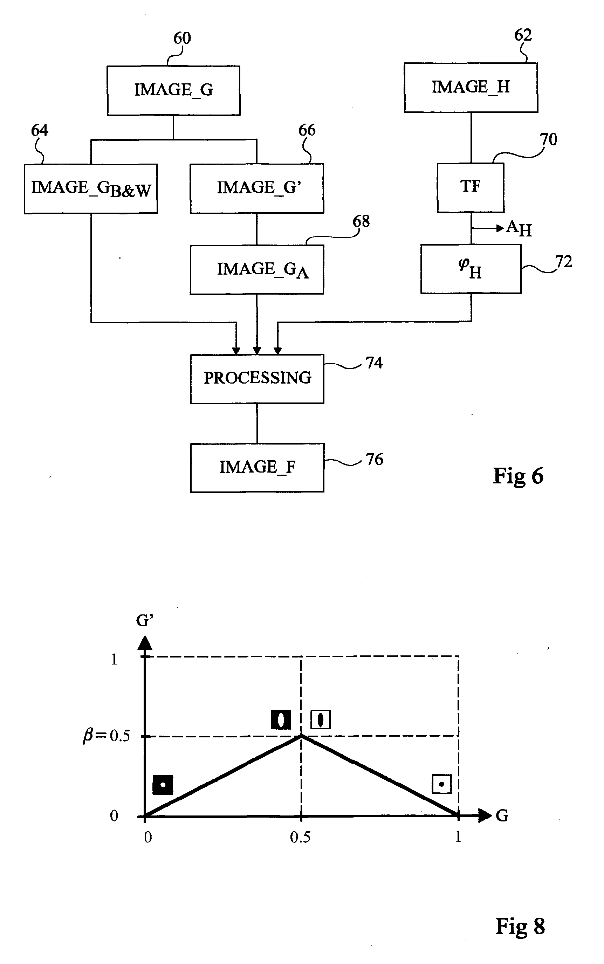

La figure 6 est un organigramme d'un procédé proposé pour intégrer un hologramme dans une image visible.

Des étapes initiales 60 et 62 du procédé consistent à choisir, d'une part, une image réelle en niveaux de gris d'une scène, IMAGE_G, que l'on souhaite voir à l'oeil nu une fois l'hologramme intégré dans l'image, et d'autre part une image source de l'hologramme, IMAGE_H, que l'on souhaite intégrer sous forme d'hologramme synthétique par codage d'ouvertures dans une image visible finale (IMAGE_F).

A partir de l'image en niveaux de gris 60 (IMAGE_G), on détermine une première matrice image (IMAGE_G$_{B\&W}$) 64 en noir et blanc, cette image comprenant des pixels d'une première teinte, par exemple noire, au niveau des pixels de l'image 60 dont le niveau de gris est inférieur à un seuil $\alpha$ (pixels foncés) et des pixels d'une deuxième teinte, par exemple blanche, pour les pixels de l'image 60 présentant un niveau de gris supérieur au seuil $\alpha$ (pixels clairs). On notera que l'inverse est également possible, l'idée étant de distinguer les pixels de l'image 60 dont le niveau de gris est inférieur ou supérieur au seuil $\alpha$.

A partir de l'image 60, des moyens de traitement et de calcul sont mis en oeuvre pour déterminer une matrice IMAGE_G', 66, présentant une taille identique à la résolution de l'image 60, IMAGE_G, dans laquelle chaque élément de la matrice contient une valeur proportionnelle à l'écart entre le niveau de gris du pixel correspondant de l'image 60 et le niveau de gris du pixel correspondant de l'image 64 (IMAGE_G$_{B\&W}$). Le lien entre les images 60 et 64 et la matrice 66 sera décrit plus en détail ci-après en relation avec la figure 8. Les valeurs stockées dans la matrice 66 sont ainsi croissantes, jusqu'à un seuil, avec le niveau de gris des pixels correspondants de l'image initiale 60 puis décroissantes lorsque le niveau de gris des pixels correspondants de l'image 60 augmente au-dessus du seuil (l'inverse est également possible).

En pratique, le seuil de détection de la matrice 66 est le même seuil que le seuil $\alpha$ de détection de l'image 64. Il est choisi de préférence à un niveau de gris moyen de l'image 60, par exemple de 0,5 à 10 % près, de préférence égal à 0,5, sur une échelle normalisée de niveaux de gris.

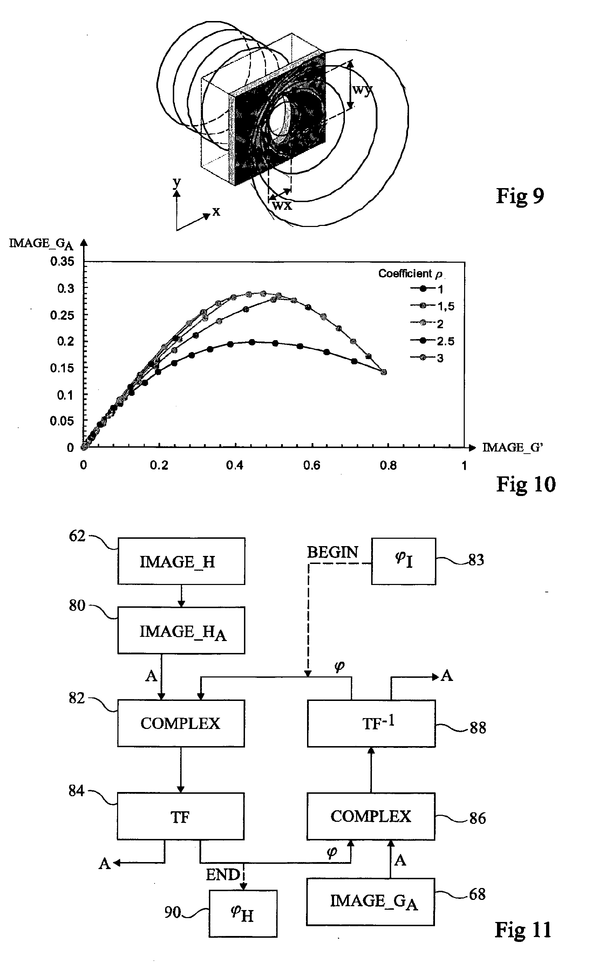

Une étape suivante 68 consiste à obtenir, à partir de la matrice 66 (IMAGE_G'), une matrice image IMAGE_G$_A$ 68 d'amplitude de la trame holographique. La détermination des pixels de l'image 68 sera décrite ci-après plus en détail, en relation avec les figures 9 et 10.

En parallèle, une étape 70 consiste à calculer la transformée de Fourier d'une image issue de l'image source de l'hologramme 62 (IMAGE_H). Plus précisément, on calcule la transformée de Fourier d'une image d'amplitude, IMAGE_H$_A$ obtenue à partir de l'image source IMAGE_H de manière similaire à l'obtention de l'image 68, IMAGE_G$_A$, à partir de l'image 66, IMAGE_G', comme cela sera décrit plus en détail ci-après. La transformée de Fourier calculée à l'étape 70 permet d'obtenir une image d'amplitude A$_H$ et une image de phase 72 ($\varphi_H$). L'image d'amplitude A$_H$ n'est pas utilisée.

Pour améliorer la qualité de l'hologramme, une distribution de phase aléatoire peut être ajoutée à l'image d'amplitude IMAGE_H$_A$ avant le calcul de la transformée de Fourier. Cette méthode de brouillage de phase est connue de l'homme de l'art.

Une étape 74, mise en oeuvre par des moyens de calcul et de traitement, consiste à combiner l'image de phase $\varphi_H$ issue de la transformée de Fourier 70, l'image en noir et blanc 64 (IMAGE_G$_{B\&W}$) et l'image d'amplitude 68 (IMAGE_G$_A$) pour obtenir une image finale 76 (IMAGE_F) dont le rendu visuel est identique au rendu visuel de l'image 60 (IMAGE_G) et qui intègre un hologramme obtenu à partir de l'image source de l'hologramme 62 (IMAGE H).

Pour cela, chaque pixel de l'image finale 76 comprend une zone centrale entourée d'un fond, défini de la façon suivante :

- si le pixel de mêmes coordonnées de l'image 64 (IMAGE_G$_{B\&W}$) est à une première teinte, par exemple noire, la zone centrale est transparente et le fond opaque et si le pixel de mêmes coordonnées de l'image 64 (IMAGE_G$_{B\&W}$) est à une deuxième teinte, par exemple blanche, la zone centrale est opaque et le fond transparent ;
- la taille de la zone centrale dans chaque pixel est calculée à partir du niveau de gris du pixel de mêmes coordonnées de l'image 68 (IMAGE_G$_A$) ;
- si le pixel de mêmes coordonnées de l'image de phase $\varphi_H$ de la transformée de Fourier de l'image 62 est foncé (valeurs de phase tendant vers $-\pi$), la zone centrale dans le pixel de mêmes coordonnées de l'image finale 76 est fortement décalée d'un côté du pixel, si le pixel de mêmes coordonnées de l'image de phase de la transformée de Fourier 72 $\varphi_H$ de l'image 62 est clair (valeurs de phase tendant vers +n), la zone centrale est décalée dans le pixel de mêmes coordonnées de l'image 76 vers un côté opposé du pixel, et si le pixel de mêmes coordonnées de l'image de phase 72 présente une teinte moyenne, la zone centrale du pixel de mêmes coordonnées de l'image finale 76 est centrée dans le pixel (le décalage de la zone centrale dans le pixel est proportionnel à la valeur du pixel équivalent de l'image ($\varphi_H$)).

Une fois l'image finale, IMAGE_F, obtenue, on réalise une lithographie d'une couche opaque définie en surface d'une plaquette selon le motif de cette image.

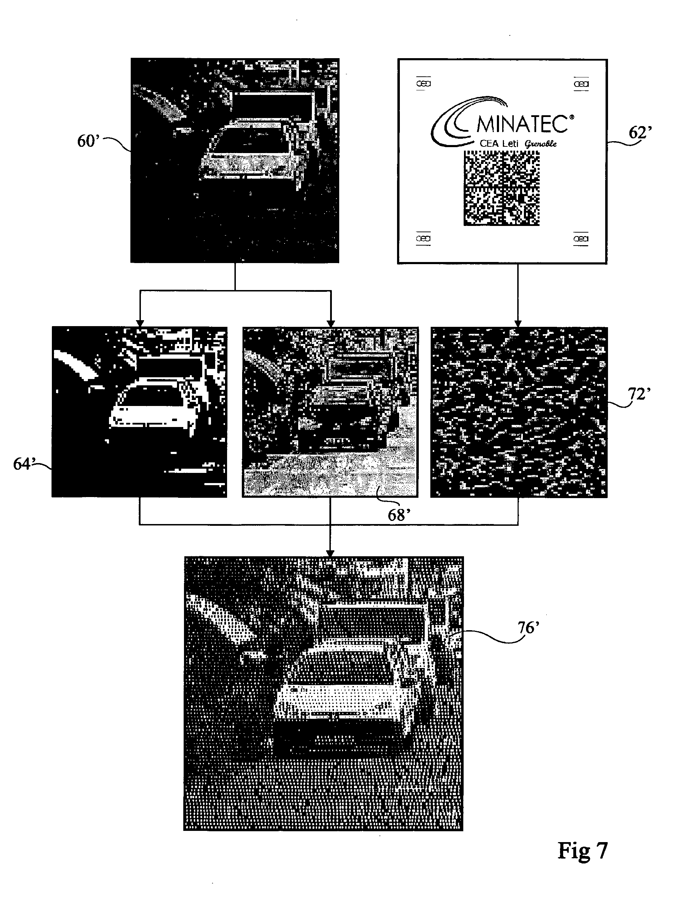

La figure 7 illustre certaines étapes de l'organigramme de la figure 6 par un exemple d'images obtenues par ces étapes. Dans cette figure, les images obtenues aux différentes étapes sont référencées par la référence de l'étape correspondante, suivie d'un'. Dans cette figure, la trame des images obtenues est visible pour une meilleure compréhension.

La figure 8 illustre le principe de formation des éléments de la matrice (IMAGE_G') à partir de l'image 60 (IMAGE_G). La matrice 66 est constituée d'éléments dont la valeur est définie en fonction de l'écart, en valeur absolue, entre le niveau de gris du pixel correspondant de l'image 60 et le niveau de gris du pixel correspondant de l'image 64 (IMAGE_G$_{B\&W}$). Plus particulièrement, cette figure illustre une courbe de la valeur G' d'un élément de la matrice 66 (IMAGE_G'), en fonction du niveau de gris G du pixel équivalent de l'image 60 (IMAGE_G).

Dans cette courbe, on voit que pour un pixel de l'image IMAGE_G présentant un niveau de gris G compris entre 0 et 0,5 (pixel noir à pixel moyennement gris), la valeur de G' d'un élément de la matrice 66 augmente jusqu'à une valeur β.

Si le niveau de gris G d'un pixel de l'image en niveaux de gris, IMAGE_G, est compris entre 0,5 et 1 (pixel moyennement gris à pixel blanc), la valeur de l'élément équivalent de la matrice IMAGE_G' décroît entre le seuil β et une valeur nulle lorsque le pixel est très clair.

Pour permettre un codage optimal des hologrammes, on pourra prévoir un seuil minimal de la valeur des éléments de la matrice IMAGE_G', pour des pixels de l'image IMAGE_G 60 complètement noirs ou complètement blancs (respectivement G = 0 ou G = 1). Cela permet d'optimiser le rendu de la lecture finale de l'hologramme, comme nous le verrons ci-après. Le seuil minimal sera typiquement de 2 % des niveaux de gris maximum ou minimum (la taille minimum de la zone centrale des pixels correspondant à un niveau de gris de 0,02 pour les tons sombres des pixels et à 0,98 pour les tons clairs des pixels, sur une échelle normalisée de niveaux de gris).

La matrice 66 (IMAGE_G') est utilisée pour obtenir une image d'amplitude IMAGE_G$_A$ (68) de l'onde associée à l'hologramme, qui est utilisée pour déterminer la taille des zones centrales des pixels de l'image finale (IMAGE_F).

On notera que, avec une forme de la zone centrale elliptique, on peut optimiser la forme de l'ellipse pour que celle-ci présente une taille maximale, dans la direction y, égale au côté du pixel avec un taux de remplissage du pixel égal à 50 %. Par des calculs géométriques simples, on obtient qu'une ellipse présentant un rapport entre grand côté et petit côté égal à n/2 permet d'obtenir un taux de remplissage du pixel égal à 50 % pour une dimension de l'ellipse, selon la direction y, égale à la largeur du pixel. Ce rapport permet en outre un rendu visuel très doux.

Pour obtenir l'image d'amplitude 68, il faut considérer les équations de diffraction d'une onde plane par une ouverture.

La figure 9 illustre, en trois dimensions, un pixel comprenant une zone centrale transparente entourée d'un fond opaque. La zone centrale présente des dimensions appelées wy dans la direction y et wx dans la direction x.

Lorsqu'une onde plane est incidente sur l'ouverture de la figure 9, ou de façon plus générale un motif de diffraction de coordonnées (n, m) d'un hologramme synthétique par codage d'ouvertures tel que proposé ci-dessus, un motif de dimensions wx$_{nm}$ et wy$_{nm}$ génère une onde diffractée sphérique d'amplitude A$^h_{nm}$ reliée aux paramètres de l'ouverture par la relation non-linéaire suivante :

$$A^h_{nm} = \frac{wy_{nm}}{2} J_1 (\pi.wx_{nm}), \qquad\qquad (1)$$

J1 étant la première fonction de Bessel. On notera que pour un codage optimal de la phase, on considère une forme elliptique de l'ouverture telle que wy > wx.

Dans une image en niveaux de gris, la surface de la portion centrale foncée d'un pixel normalisé vis-à-vis de la surface du pixel fixe la tonalité perçue par l'observateur. Cette tonalité I$_{nm}$ est reliée à la forme du pixel par la relation :

$$I_{nm} = \frac{\pi.wx_{nm}.wy_{nm}}{4} \qquad\qquad (2)$$

Pour obtenir l'image d'amplitude de l'image initiale 60 (IMAGE_G), on applique directement l'équation (1) à des ouvertures dont la surface est définie de façon que le rapport I$_{nm}$ entre la surface des ouvertures et la surface du pixel corresponde à la valeur de l'élément correspondant de la matrice 66 (IMAGE_G'). Pour assurer une bonne définition de l'image d'amplitude IMAGE_G$_A$ 68, le seuil β peut être fixé à 0,5 (la surface de l'ouverture représentant la moitié de la surface du pixel). On obtient ainsi une relation permettant de calculer les dimensions des zones centrales des pixels de l'image IMAGE_F.

En pratique, on définit un rapport de forme de l'ouverture ρ = wy/wx et on limite wy à une valeur maximale égale à 1 (côté des pixels normalisé). Les deux équations ci-dessus permettent d'obtenir une relation entre la valeur de l'élément correspondant I$_{nm}$ de la matrice IMAGE_G' et l'amplitude de l'onde diffractée par ce pixel (A$^h_{nm}$), en fonction de p, qui est la relation suivante :

$$A_{nm}^{h} = \sqrt{\frac{\rho I_{nm}}{\pi}} \cdot J_{1}\left(2\sqrt{\frac{\pi I_{nm}}{\rho}}\right) \qquad\qquad (3)$$

L'équation ci-dessus permet ainsi de lier les éléments de la matrice IMAGE_G', et donc le niveau de gris du pixel correspondant de l'image initiale IMAGE_G, à l'amplitude du pixel de mêmes coordonnées de l'image IMAGE_G_A, c'est-à-dire à la taille de la zone centrale des pixels de l'image finale IMAGE_F.

La figure 10 donne une représentation de cette fonction de transfert pour différentes valeurs de $\rho$. On notera que le choix d'un motif elliptique limite la gamme de valeurs d'intensité à wx = 1 et wy = 1, soit une intensité maximale de 0,8 dans le pixel.

Au-delà, le motif déborde de la cellule et le codage de la phase se dégrade. Dans le cas du procédé ci-dessus, l'intensité $I_{nm}$ est limitée au seuil $\alpha$ prédéfini par la courbe de la figure 8, c'est-à-dire à 0,5. Pour optimiser l'amplitude de l'onde émise tout en gardant une forme de motif quasi-circulaire, on choisit préférentiellement $\rho = \pi/2$, comme nous l'avons vu ci-dessus. Dans ce cas, l'équation (3) se simplifie en :

$$A_{nm}^{h} = \sqrt{\frac{I_{nm}}{2}} \cdot J_{1}\left(\sqrt{8 I_{nm}}\right) \qquad\qquad (4)$$

On notera que, pour simplifier la programmation de cette fonction de transfert, la fonction de Bessel pourra être remplacée par son développement série avec une bonne précision, ce qui permet d'obtenir l'équation suivante :

$$A_{nm}^{h} = (I_{nm}) - (I_{nm})^{2} + \frac{1}{3}(I_{nm})^{3} \qquad\qquad (5)$$

Ainsi, les pixels de l'image finale obtenus par le procédé de la figure 6 présentent une structure tramée dont la zone centrale a une amplitude de trame holographique définie par l'équation ci-dessus à partir de l'élément de mêmes coordonnées de la matrice IMAGE_G'.

Le procédé de la figure 6 permet avantageusement d'obtenir une image présentant un visuel identique à l'image en niveaux de gris IMAGE_G, dissimulant un hologramme synthétique par codage d'ouvertures et dont la lecture est directe. Ce procédé n'est toutefois pas optimal du fait que l'image d'amplitude $A_H$ de la transformée de Fourier de l'image source de l'hologramme IMAGE_H a été supprimée et remplacée par l'image d'amplitude IMAGE_G_A. La reconstruction de l'image IMAGE_H est donc dégradée, comme on le verra par la suite.

On notera que l'image d'amplitude IMAGE_H_A dont la transformée de Fourier est calculée à l'étape 70 de la figure 6 est obtenue à partir de l'image source IMAGE_H 62 en suivant le même procédé que celui d'obtention de l'image 68 (IMAGE_G_A) à partir de la matrice 66 (IMAGE_G'), c'est-à-dire en calculant l'amplitude diffractée par des ouvertures dont la taille dépend du niveau de gris du pixel équivalent de l'image source IMAGE_H.

La figure 11 illustre un procédé d'optimisation permettant d'obtenir une image de phase $\varphi_H$ issue de la transformée de Fourier de l'image d'amplitude IMAGE_H_A et de l'image d'amplitude IMAGE_G_A, permettant de pallier à la dégradation à la lecture du procédé décrit ci-dessus.

Le procédé d'optimisation de l'image de phase imposée à l'image finale proposé ici est une méthode d'optimisation itérative décrite dans la publication de Gerchberg et Saxton intitulée "A pratical algorithm for the determination of the phase from image and diffraction plane pictures", Optik, Vol. 35, 237-246.

Partant de l'image source de l'hologramme, IMAGE_H (62), on détermine l'image d'amplitude de cette image, IMAGE_H_A (80), de façon similaire à la détermination de l'amplitude de la trame holographique IMAGE_G_A issue de la matrice IMAGE_G' (66).

A une étape suivante 82, l'image d'amplitude IMAGE_H_A 80 est combinée à une composante de phase d'initialisation $\varphi_I$ 83 issue soit d'une distribution de phase aléatoire du type brouillage de phase, soit d'une composante de phase continue, pour obtenir une valeur complexe (initialisation du processus). On calcule ensuite la transformée de Fourier de l'image complexe obtenue à l'étape 82, à une étape 84.

L'image d'amplitude A obtenue par la transformée de Fourier de l'étape 84 est laissée de côté (tout comme l'image d'amplitude $A_H$ en figure 6). A une étape 86, une valeur complexe est calculée par combinaison de l'image d'amplitude, IMAGE_G_A, 68, obtenue à partir de l'image en niveaux de gris 60 et l'image de phase $\varphi$ obtenue à l'étape 84.

On calcule ensuite, à une étape 88, la transformée de Fourier inverse de la valeur complexe obtenue à l'étape 86. L'image d'amplitude A du résultat obtenu est laissée de côté. L'image de phase $\varphi$ obtenue par cette transformée de Fourier inverse, quant à elle, est introduite en entrée de l'étape 82 en lieu et place de la distribution de phase d'initialisation du processus $\varphi_I$, en combinaison avec l'image d'amplitude IMAGE_H$_A$. L'étape 84 de calcul de la transformée de Fourier de la valeur complexe obtenue à l'étape 82 est réalisée de nouveau pour obtenir une image de phase $\varphi_H$ optimisée (étape 90), du fait de la prise en compte de l'image 68, IMAGE_G$_A$. Le cycle d'étapes 82 à 88 peut être réitéré plusieurs fois pour optimiser l'image de phase $\varphi_H$ obtenue à l'étape 90.

L'image de phase obtenue à l'étape 90 peut être utilisée directement dans le procédé de la figure 6 en remplacement de l'image de phase 72. En effet, du fait de la réalisation du cycle décrit ci-dessus, cette image de phase $\varphi_H$ intègre des informations issues de l'image source de l'hologramme, IMAGE_H, mais intègre également un correctif qui permet de contrecarrer le fait que la taille des zones centrales des pixels de l'image finale, IMAGE_F, obtenue ne dépend pas de l'image source de l'hologramme mais des niveaux de gris de l'image visible en niveaux de gris, IMAGE_G.

La réalisation du cycle d'amélioration de l'image de phase $\varphi_H$ ci-dessus permet l'amélioration de la lecture de l'hologramme intégré dans l'image tramée. On notera que le cycle ci-dessus pourra être réitéré autant de fois que nécessaire pour que l'image de phase $\varphi_H$ finale de l'étape 90 comprenne un correctif efficace de la perte d'information liée à la non-utilisation de l'image d'amplitude de la transformée de Fourier de l'image source de l'hologramme.

Au bout d'un certain nombre d'itérations, dont le nombre peut varier comme on le verra ci-après, on obtient une image de phase $\varphi_H$ optimisée qui est utilisée dans le procédé de la figure 6.

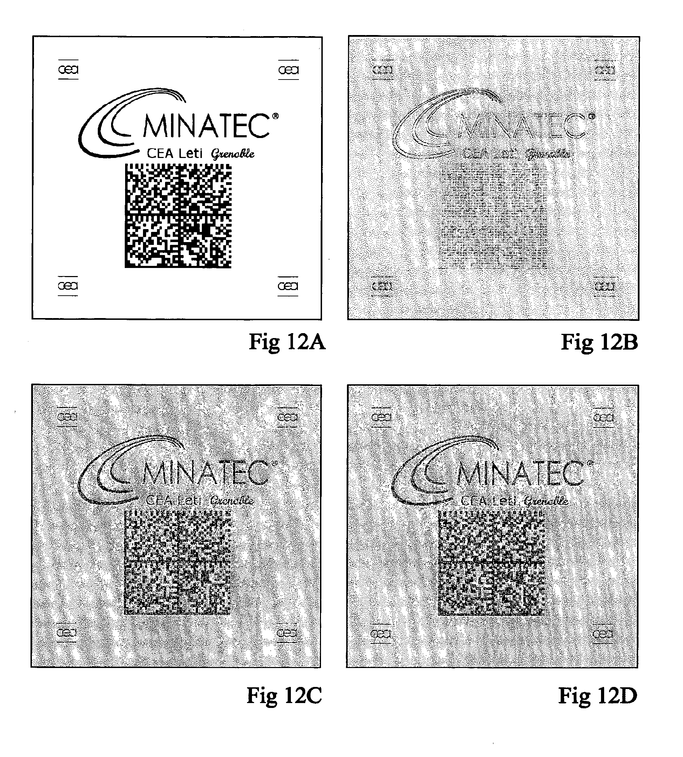

La figure 12A illustre un exemple d'une image source de l'hologramme IMAGE_H. Les figures 12B, 12C et 12D illustrent des résultats de simulation obtenus sur la base d'un dispositif de lecture tel que celui de la figure 3 sur une image tramée obtenue par le procédé de la figure 6.

Plus précisément, l'image 12B illustre la lecture sur une image obtenue par le procédé de la figure 6 sans réaliser de cycle d'ajustement de l'image de phase de la figure 11, l'image 12C illustre la lecture sur une image obtenue par le procédé de la figure 6 en réalisant trois fois le cycle d'ajustement de la figure 11 et la figure 12D illustre la lecture sur une image obtenue par le procédé de la figure 6 en réalisant 300 fois le cycle d'ajustement de la figure 11.

De ces figures, on peut noter que la réalisation du procédé d'optimisation de la figure 11 permet d'obtenir, même avec un faible nombre de cycles, un correctif efficace de l'image de phase appliquée à l'image finale, prenant en compte la perte d'information initiale de l'amplitude de la transformée de Fourier de l'image source de l'hologramme.

En effet, la lecture réalisée sur une image obtenue par le procédé de la figure 6 après trois réitérations seulement du cycle de la figure 11 (figure 12C) est de très bonne qualité, quasiment de même qualité que la lecture de la figure 12D.

Dans le cadre du procédé ci-dessus, la qualité de la visualisation de l'image en niveau de gris est un avantage recherché.

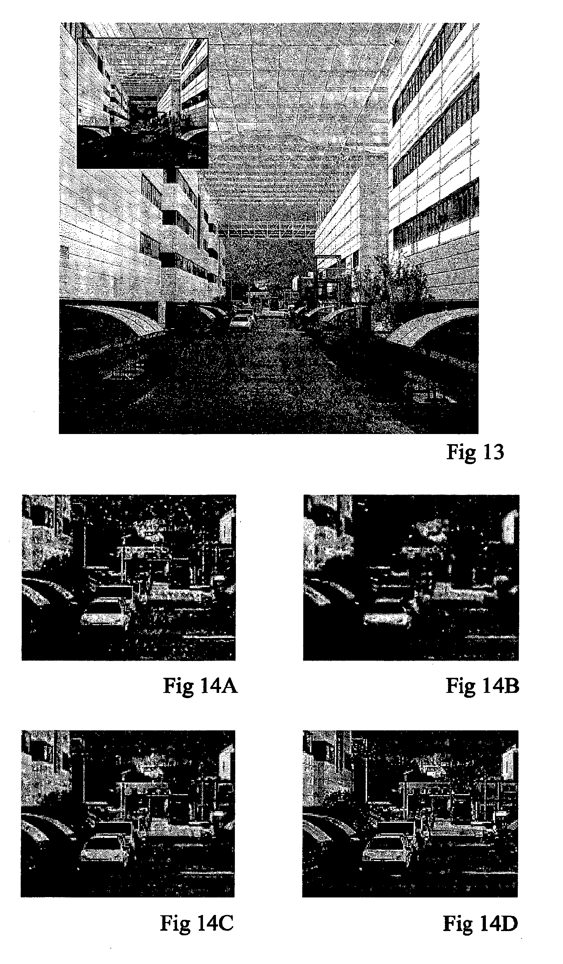

La figure 13 illustre le résultat obtenu à partir d'une image représentée en insert, à une résolution d'écran qui laisse apparaître la trame (les zones centrales des pixels présentant un rapport de forme $\rho = 1{,}5$). La qualité du rendu de gris est largement satisfaisante lorsque l'image est observée à une distance suffisante, l'éloignement de la figure introduisant un flou visuel qui gomme l'effet de la trame.

Pour simuler cet effet de flou, on a cherché à rendre artificiellement floue l'image avec un flou gaussien de largeur de 2 et de 4 pixels. Les figures 14A et 14B montrent les résultats obtenus, la figure 14D illustrant l'image initiale dont sont issues les images des figures 14A et 14B : on voit apparaître une granularité sur l'image liée à certaines conjonctions de déplacement des motifs de trame.

Comme on l'a présenté précédemment, la position des motifs de trame est définie par la valeur de la phase affectée au pixel. Si deux pixels successifs ont des valeurs de phase dont l'écart est important, la distance entre les motifs sera également importante. Suivant que le fond de trame est clair ou sombre cet écart se traduira par l'apparition d'un point blanc ou noir.

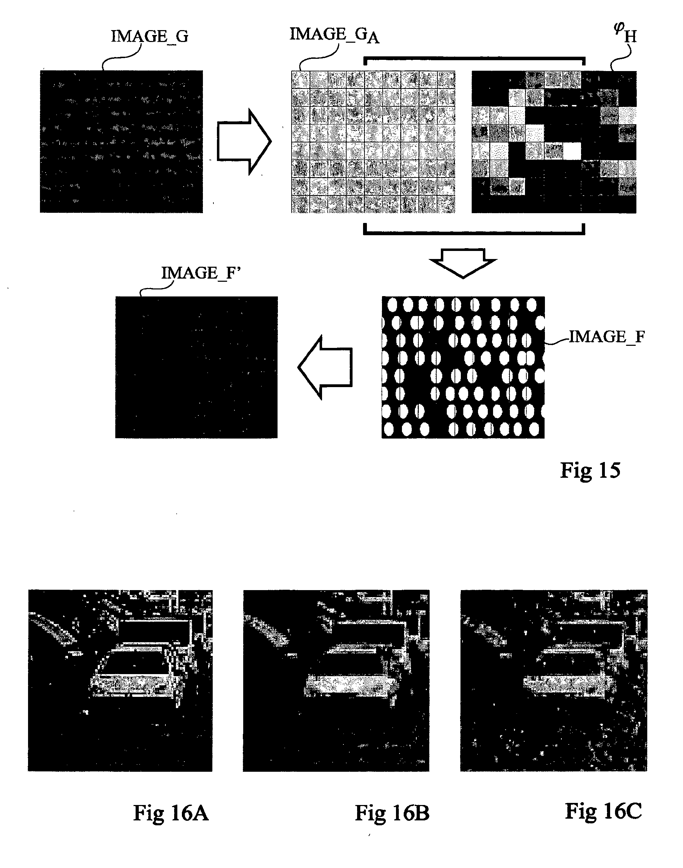

La figure 15 montre un détail de l'image IMAGE_G en niveaux de gris à partir duquel on calcule les images IMAGE_G$_A$ et $\varphi_H$. Ces grandeurs permettent de calculer la répartition des motifs représentés sur l'image IMAGE_F. On voit qu'aux endroits où la phase passe d'une valeur maximale (pixel blanc de $\varphi_H$) à une valeur minimale (pixel noir de $\varphi_H$) on obtient un décalage opposé des deux motifs qui conduit à l'apparition d'un "vide". Après l'opération de flou gaussien, ce vide se traduit par l'apparition de pixels sombres sur l'image résultante (IMAGE_F').

Ce phénomène est gênant si la détection de l'image reconstruite doit être rigoureusement identique à l'original. C'est généralement le cas en préservation des données.

Il est toutefois possible de réduire cet effet. Pour cela, on peut citer les méthodes suivantes :

- après simulation de l'effet d'écriture et de détection, on modifie l'image source pour anticiper l'opacification et l'éclaircissement de certains pixels ;
- on introduit directement dans la boucle de calcul de la phase une modification de l'amplitude pour prendre en compte la présence des sauts de phase ;
- on sur-échantillonne l'image source IMAGE_G pour augmenter le flou sans perte de résolution image.

Le résultat de cette dernière proposition est illustré en figure 14C, sur une image sur-échantillonnée par un facteur 2, en conservant un flou de 2 pixels image. On voit nettement l'amélioration sur le rendu de niveau de gris.

Les figures 16B et 16C illustrent le résultat d'un flou sur une image tramée de la façon proposée ci-dessus, et par les techniques antérieures, l'image initiale étant illustrée en figure 16A. Dans le cas de l'art antérieur, l'absence de cellules sombres et claires comme dans notre cas, provoque des défauts d'une seule tonalité, claire dans notre exemple. Ces défauts sont donc particulièrement visibles quand ils apparaissent sur le fond de tonalité opposée (figures 16B et 16C). Le procédé proposé ici résout ce problème.

De nombreuses applications du procédé ci-dessus sont envisageables.

Une première application concerne le stockage analogique des images. La solution proposée permet une préservation pérenne des données graphiques grâce à un mode de sauvegarde visuel. La récupération des données se fait sans décodage numérique et ne risque pas l'obsolescence du format de lecture.

Cette solution a l'inconvénient d'un mode de récupération des données relativement long ; une solution serait donc de conserver la pérennité du stockage analogique tout en utilisant la rapidité de récupération de données numériques.

Prenons l'exemple d'une image de 1000x1000 pixels, codée sur 256 niveaux de gris (1 octet). Son poids numérique, au format bitmap sans compression, est d'environ $10^3$ ko.

L'idée est de coder une version numérique de l'image source de l'hologramme IMAGE_H. Pour faciliter la détection, une représentation binaire de l'image source de l'hologramme IMAGE_H est choisie, en supposant que seulement 50 % de la surface de l'hologramme est exploitable. Cette restriction est liée à la difficulté qu'il y a à obtenir des images non bruitées en optique cohérente. Cela conduit à une capacité de stockage en bits correspondant à 50 % du nombre de pixels. On obtient une capacité numérique d'environ 62 ko. Cette réduction de la taille du fichier peut être obtenue en stockant une image compressée de l'image d'origine IMAGE_G, par exemple au format jpeg.

L'utilisateur peut donc avoir le choix entre une détection numérique rapide des images numériques au format compressé ou une détection analogique lente des fichiers sources au format natif.

Il est à noter que la détection de l'image sur le format compressé peut aussi être utilisée pour améliorer la qualité de l'image source reconstruite, en aidant notamment à corriger l'effet de granularité.

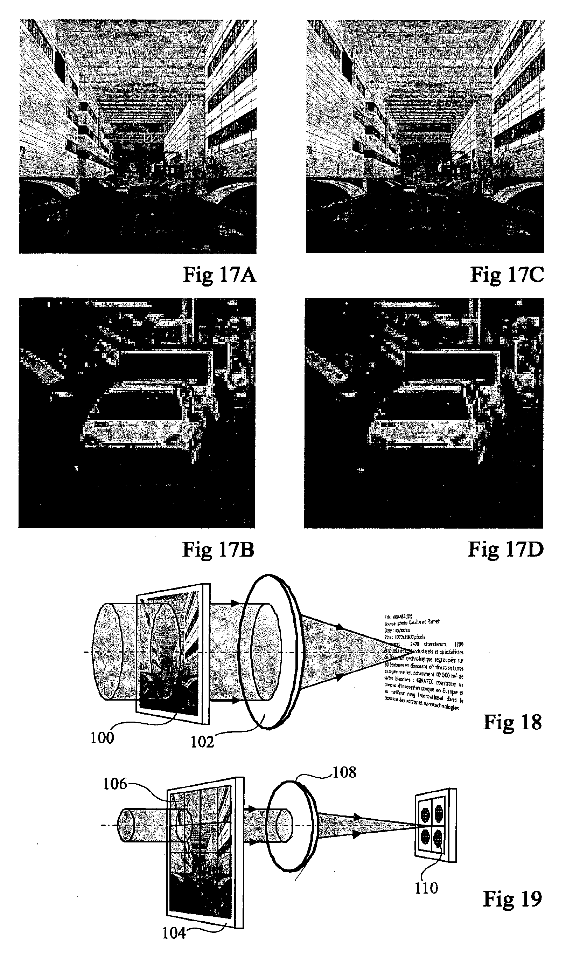

Les figures 17A à 17D illustrent deux exemples d'images IMAGE_G suivant ce principe, en vue complète en ce qui concerne les images 17A et 17C, et en vue agrandie en ce qui concerne les figures 17B et 17D. Plus particulièrement, les figures 17A et 17B illustrent une image au format bimap présentant une taille de 1000 ko et une image au format jpeg présentant une taille de 62 ko.

Dans le même domaine d'application, on peut également proposer une variante pour augmenter la capacité de surface du média de stockage analogique.

En plus des données analogiques, le média de stockage doit pouvoir préserver les métadonnées associées aux documents visuels. Ces données sont contenues en arrière plan du fichier numérique et peuvent concerner toutes formes d'information (nom du fichier, date de création, format du fichier, commentaires, etc...). Ces informations peuvent être visualisées au format binaire (suite de caractères) et peuvent accepter une certaine dégradation (la forme passe derrière le fond). Ce type de données s'applique donc bien au stockage par holographie synthétique.

La figure 18 présente cette application. Un faisceau laser traverse la représentation tramée de l'image, formée sur un support 100, dont le rendu visuel est en niveaux de gris. Derrière une lentille de Fourier 102, les métadonnées 104 associées sont visibles. Ces métadonnées sont accessibles visuellement à l'aide d'un laser et d'une optique de conception simple. Avantageusement, l'accès à leur contenu ne dépend pas d'un format de décodage numérique.

La renumérisation des données analogiques étant un processus long, la représentation tramée de l'image IMAGE_G doit être imagée sur un capteur matriciel pour reconstituer la matrice des pixels de niveaux de gris d'origine. Ce processus se fait par une succession de prises d'images qui doivent ensuite être raboutées. Si l'image présente peu de détails, l'opération de raboutage peut être compliquée.

Une solution peut être de disposer au sein de l'image des hologrammes d'alignement comme présenté en figure 19.

La représentation tramée 104 présente une série d'hologrammes 106. Chaque hologramme 106 forme dans le plan focal d'une lentille de Fourier 108 un point lumineux 110 à une coordonnée précise. Si le faisceau sonde est au croisement exact de quatre hologrammes, on détecte dans le plan de lecture quatre points lumineux 110 différents. Le positionnement de la plaquette sur laquelle sont formés les hologrammes sur l'axe optique peut donc être asservi à la détection de ces points lumineux. Le système peut balayer l'image en se positionnant en des endroits précis, pour lesquels l'intensité des quatre points est équilibrée, indépendamment du contenu visuel de l'image.

Une autre application du procédé proposé ici, et qui sort du cadre du stockage analogique, consiste en la sécurisation de documents d'identité, et de façon plus générale de tout type de documents. On peut envisager de coder dans la photographie des cartes d'identité un hologramme permettant d'attester de l'authentification du document.

Des modes de réalisation particuliers de la présente invention ont été décrits. Diverses variantes et modifications apparaîtront à l'homme de l'art. En particulier, d'autres applications de l'intégration d'un hologramme par codage d'ouvertures dans une image tramée dont le rendu est un rendu en niveaux de gris pourront être prévues. En outre, on notera que des procédés de brouillage de l'hologramme connus, impliquant l'impossibilité d'une lecture directe de l'hologramme, pourront être prévus en combinaison avec le procédé décrit ici. Dans ce cas, l'utilisation d'une clé de phase ou d'un masque de lecture pourra être prévu lors de la lecture de l'hologramme, par exemple avec un dispositif de lecture tel que celui de la figure 3.

Divers modes de réalisation avec diverses variantes ont été décrits ci-dessus. On notera que l'homme de l'art pourra combiner divers éléments de ces divers modes de réalisation et variantes sans faire preuve d'activité inventive.

## Revendications

1. Procédé d'intégration d'un hologramme synthétique dans une image directement observable d'une scène, comprenant les étapes suivantes :

   définir une première image (IMAGE_G) de ladite scène, comprenant des pixels en niveaux de gris ;
   fabriquer des première et deuxième matrices à partir de la première image, la première matrice (IMAGE_G$_{B\&W}$) comprenant des pixels d'une première et d'une deuxième teinte selon que le pixel correspondant de la première image (IMAGE_G) a un niveau de gris inférieur ou supérieur à un seuil ($\alpha$), chaque élément de la deuxième matrice (IMAGE_G') comprenant une valeur égale à l'écart de niveau de gris entre le pixel correspondant de la première image (IMAGE_G) et le pixel correspondant de la première matrice (IMAGE_G$_{B\&W}$) ;
   fabriquer une troisième matrice de pixels ($\varphi_H$) en calculant l'image de phase de l'hologramme synthétique obtenu par transformée de Fourier d'une image issue d'une deuxième image (IMAGE_H) source de l'hologramme ;
   fabriquer une quatrième matrice de pixels (IMAGE_F), chaque pixel de la quatrième matrice comprenant une zone interne au pixel appelée zone centrale dont la taille de la surface est déterminée à partir de la valeur du pixel correspondant de la deuxième matrice (IMAGE_G') et dont un décalage par rapport au centre du pixel est issu de la valeur du pixel correspondant de la troisième matrice ($\varphi_H$) ; et
   réaliser une lithographie d'une couche opaque en surface d'une plaquette selon le motif défini par la quatrième matrice de pixels (IMAGE_F), la lithographie étant prévue pour éliminer, dans un pixel, la couche opaque à l'intérieur de la zone centrale si le pixel équivalent de la première matrice (IMAGE_G$_{B\&W}$) est de la première teinte et pour éliminer la couche opaque à l'extérieur de la zone centrale si le pixel équivalent de la première matrice (IMAGE_G$_{B\&W}$) est de la deuxième teinte.

2. Procédé selon la revendication 1, dans lequel la taille de la zone centrale de chacun des pixels de la quatrième matrice (IMAGE_F) est calculée à partir de la valeur du pixel correspondant d'une cinquième matrice de pixels (IMAGE_G$_A$), chaque pixel de la cinquième matrice (IMAGE_G$_A$) étant obtenu par calcul de l'amplitude diffractée d'une ouverture définie dans ce pixel, le rapport entre la surface de l'ouverture et la surface du pixel étant égal à la valeur de l'élément correspondant de la deuxième matrice (IMAGE_G').

3. Procédé selon la revendication 2, dans lequel l'amplitude A$^h_{nm}$ d'un pixel de la cinquième matrice (IMAGE_G$_A$) est liée à la valeur I$_{nm}$ de l'élément correspondant de la deuxième matrice (IMAGE_G') par la relation suivante :

$$A^h_{nm} = \sqrt{\frac{I_{nm}}{2}}.J_1(\sqrt{8I_{nm}})$$

J$_1$ étant la première fonction de Bessel.

4. Procédé selon la revendication 2 ou 3, dans lequel la troisième matrice ($\varphi_H$) est obtenue en réalisant les étapes suivantes :

   (a) calculer une sixième matrice d'amplitude (IMAGE_H$_A$) obtenue à partir de la deuxième image source de l'hologramme (IMAGE_H) en réalisant les mêmes étapes que celles permettant d'obtenir la cinquième matrice (IMAGE_G$_A$) à partir de la deuxième matrice (IMAGE_G') ;
   (b) combiner les pixels de la sixième matrice d'amplitude (IMAGE_H$_A$) à une distribution de phase aléatoire ou à une composante continue de phase pour obtenir une valeur complexe ; et
   (c) calculer l'image de phase de la transformée de Fourier de ladite valeur complexe.

**5.** Procédé selon la revendication 2 ou 3, dans lequel la troisième matrice ($\varphi_H$) est obtenue par un procédé d'optimisation tirant profit de la cinquième matrice (IMAGE_$G_A$).

**6.** Procédé selon la revendication 5, dans lequel le procédé d'optimisation consiste à :

(a) calculer une sixième matrice d'amplitude (IMAGE_$H_A$) obtenue à partir de la deuxième image source de l'hologramme (IMAGE_H) en réalisant les mêmes étapes que celles permettant d'obtenir la cinquième matrice (IMAGE_$G_A$) à partir de la deuxième matrice (IMAGE_G') ;
(b) combiner (82) les pixels de la sixième matrice d'amplitude (IMAGE_$H_A$) à une distribution de phase aléatoire ou à une composante de phase continue pour obtenir une première valeur complexe ;
(c) calculer (84) la transformée de Fourier de la première valeur complexe ;
(d) combiner (86) les pixels de la cinquième matrice de pixels (IMAGE_$G_A$) et les pixels de l'image de phase issue de la transformée de Fourier de l'étape (c) pour obtenir une deuxième valeur complexe ;
(e) calculer (88) la transformée de Fourier inverse de la deuxième valeur complexe ;
(f) combiner (82) les pixels de la sixième matrice d'amplitude (IMAGE_$H_A$) aux pixels de l'image de phase issue du calcul (88) de l'étape (e) pour obtenir une nouvelle première valeur complexe ;
(g) réitérer l'étape (c) pour calculer (84) la transformée de Fourier de ladite nouvelle première valeur complexe, la troisième matrice ($\varphi_H$) correspondant à l'image de phase obtenue de cette dernière transformée de Fourier.

**7.** Procédé selon la revendication 6, dans lequel le procédé d'optimisation comprend en outre la réitération des étapes (d) à (g), la troisième matrice ($\varphi_H$) correspondant à l'image de phase obtenue à l'étape (g) après plusieurs cycles de réitération des étapes (d) à (g).

**8.** Procédé selon la revendication 7, dans lequel au moins trois cycles sont réalisés.

**9.** Procédé selon l'une quelconque des revendications 1 à 8, dans lequel le décalage de la zone centrale par rapport au centre du pixel de chaque pixel de la quatrième matrice (IMAGE_F) est directement proportionnel de la valeur du pixel correspondant de la troisième matrice ($\varphi_H$).

**10.** Procédé selon l'une quelconque des revendications 1 à 9, dans lequel le seuil ($\alpha$) de niveaux de gris est égal à 0,5, à 10 % près, sur une échelle normalisée de niveaux de gris.

**11.** Procédé selon l'une quelconque des revendications 1 à 10, dans lequel la zone centrale de chaque pixel de la quatrième matrice (IMAGE_F) est elliptique.

**12.** Procédé selon la revendication 11, dans lequel le rapport de forme de la zone centrale elliptique de chaque pixel de la quatrième matrice (IMAGE_F) est égal à n/2.

**13.** Procédé selon l'une quelconque des revendications 1 à 12, dans lequel la première teinte de la première matrice (IMAGE_$G_{B\&W}$) est une teinte minimum, la deuxième teinte de la première matrice (IMAGE_$G_{B\&W}$) est une teinte maximum, la lithographie étant prévue pour éliminer la couche opaque à l'intérieur de la zone centrale d'un pixel si le pixel équivalent de la première matrice (IMAGE_$G_{B\&W}$) est de la première teinte, et pour éliminer la couche opaque à l'extérieur de la zone centrale d'un pixel si le pixel équivalent de la première matrice (IMAGE_$G_{B\&W}$) est de la deuxième teinte.

**14.** Procédé selon l'une quelconque des revendications 1 à 13, dans lequel une taille minimum de la zone centrale des pixels de la quatrième matrice (IMAGE_F) est imposée.

**15.** Procédé selon la revendication 14, dans lequel la taille minimum de la zone centrale des pixels de la quatrième matrice (IMAGE_F) correspond à un niveau de gris de 0,02 pour les tons sombres desdits pixels et à 0,98 pour les tons clairs desdits pixels, sur une échelle normalisée de niveaux de gris.

**Patentansprüche**

**1.** Ein Verfahren zum Integrieren eines synthetischen Hologramms in einem direkt beobachtbaren Bild einer Szene, wobei die folgenden Schritte vorgesehen sind:

Definieren eines ersten Bildes (IMAGE_G) der erwähnten Szene, das Grauskalenpixel aufweist;

Bilden erster und zweiter Matrizen aus dem ersten Bild, wobei die erste Matrix (IMAGE_G$_{B\&W}$) Pixel einer ersten und einer zweiten Schattierung aufweist, abhängig davon ob das entsprechende Pixel des ersten Bildes (IMAGE_G) einen Graupegel größer als oder kleiner als eine Schwelle ($\alpha$) besitzt, wobei jedes Element der zweiten Matrix (IMAGE_G') einen Wert aufweist, gleich der Graupegeldifferenz zwischen dem entsprechenden Pixel des ersten Bildes (IMAGE_G) und dem entsprechenden Pixel der ersten Matrix (IMAGE_G$_{B\&W}$);

Formen einer dritten Pixelmatrix ($\varphi_H$) durch Berechnen des Phasenbildes des synthetischen Hologramms, Erhalten durch die Fourier-Transformation eines Bildes, welches einen Ursprung hat, in einem zweiten Quellenbild (IMAGE_H) des Hologramms;

Formen einer vierten Pixelmatrix (IMAGE_F), wobei jedes Pixel der vierten Matrix einen Bereich aufweist, innerhalb des Pixels genannt Mittelfläche mit einem Oberflächengebiet bestimmt basierend auf dem entsprechenden Pixelwert der zweiten Matrix (IMAGE_G') und mittenversetzt bezüglich der Mitte des Pixels entsprechend dem Wert des entsprechenden Pixels der dritten Matrix ($\varphi_H$); und

Ausführen einer Lithografie einer opaken bzw. undurchsichtigen Schicht an der Oberfläche eines Wafers entsprechend dem Muster definiert durch die vierte Pixelmatrix (IMAGE_F), wobei die Lithografie vorgesehen ist zur Entfernung von einem Pixel der opaken Schicht innerhalb der Mittelfläche, wenn das äquivalente Pixel der ersten Matrix (IMAGE_G$_{B\&W}$) von der ersten Schattierung ist und zur Entfernung der opaken Schicht außerhalb der Mittelfläche, wenn das äquivalente Pixel der ersten Matrix ((IMAGE_G$_{B\&W}$) von der zweiten Schattierung ist.

2. Verfahren nach Anspruch 1, wobei die Größe der Mittelfläche jedes Pixel der vierten Matrix (IMAGE_F) berechnet wird aus dem Wert des entsprechenden Pixels einer fünften Pixelmatrix (IMAGE_G$_A$), wobei jedes Pixel der fünften Matrix (IMAGE_G$_A$) erhalten wird durch Berechnung der gebrochenen Amplitude einer Öffnung definiert in diesem Pixel, wobei das Verhältnis des Öffnungsoberflächengebietes zum Pixeloberflächengebiet gleich dem Wert des entsprechenden Elements der zweiten Matrix (IMAGE_G') ist.

3. Das Verfahren nach Anspruch 2, wobei die Amplitude A$^h_{nm}$ eines Pixels der fünften Matrix (IMAGE_G$_A$) abhängt vom Wert I$_{nm}$ des entsprechenden Elements der zweiten Matrix (IMAGE_G') entsprechend der folgenden Beziehung:

$$A^{h'}_{nm} = \sqrt{\frac{I_{nm}}{2}} \cdot J_1(\sqrt{8 I_{nm}})$$

wobei J$_1$ die erste Bessel-Funktion ist.

4. Das Verfahren nach Anspruch 2 oder 3, wobei die dritte Matrix ($\varphi_H$) erhalten wird durch Ausführung der folgenden Schritte:

    (a) Berechnen einer sechsten Amplitudenmatrix (IMAGE_H$_A$) erhalten aus dem zweiten Quellenbild des Hologramms (IMAGE_H) durch Ausführen der gleichen Schritte wie denjenigen die es ermöglichen die fünfte Matrix (IMAGE_G$_A$) aus der zweiten Matrix (IMAGE_G') zu erhalten;

    (b) Kombinieren der Pixel der sechsten Amplitudenmatrix (IMAGE_H$_A$) mit einer Zufallsphasenverteilung oder mit einer kontinuierlichen Phasenkomponente zum Erhalt eines komplexen Wertes; und

    (c) Berechnen des Phasenbildes der Fourier-Transformation aus dem erwähnten komplexen Wert.

5. Das Verfahren nach Anspruch 2 oder 3, wobei die dritte Matrix ($\varphi_H$) erhalten wird durch ein Optimierungsverfahren welches die fünfte Matrix (IMAGE_G$_A$) verwendet.

6. Das Verfahren nach Anspruch 5, wobei das Optimierungsverfahren folgendes aufweist:

    (a) Berechnen einer sechsten Amplitudenmatrix (IMAGE_H$_A$) erhalten aus dem zweiten Quellenbild des Hologramms (IMAGE_H) durch Ausführen der gleichen Schritte wie denjenigen die es ermöglichen die fünfte Matrix (IMAGE_G$_A$) aus der zweiten Matrix (IMAGE_G') zu erhalten;

    (b) Kombinieren (82) der Pixel der sechsten Amplitudenmatrix (IMAGE_H$_A$) mit einer Zufallsphasenverteilung oder mit einer kontinuierlichen Komponente zum Erhalt eines ersten komplexen Wertes;

    (c) Berechnen (84) der Fourier-Transformation des ersten komplexen Wertes;

    (d) Kombinieren (86) der Pixel der sechsten Pixelmatrix (IMAGE_G$_A$) mit den Pixeln des Phasenbildes resultierend aus der Fourier-Transformation des Schrittes (c) zum Erhalt eines zweiten komplexen Wertes;

(e) Berechnen (88) der inversen Fourier-Transformation des zweiten komplexen Wertes;

(f) Kombinieren (82) der Pixel der sechsten Amplitudenmatrix (IMAGE_$H_A$) mit den Pixeln des Phasenbildes resultierend aus der Berechnung (88) des Schrittes (e) zum Erhalt eines neuen ersten komplexen Wertes;

(g) Wiederholung des Schrittes (c) zur Berechnung (84) der Fourier-Transformation des neuen ersten komplexen Wertes, wobei die dritte Matrix ($\varphi_H$) dem Phasenbild entspricht, erhalten aus dieser letzten Fourier-Transformation.

**7.** Das Verfahren nach Anspruch 6, wobei das Optimierungsverfahren ferner das Wiederholen der Schritte (d) bis (g) aufweist, wobei die dritte Matrix ($\varphi_H$) dem Phasenbild entspricht, erhalten bei Schritt (g) nach mehreren Zyklen der Wiederholung der Schritte (d) bis (g).

**8.** Das Verfahren nach Anspruch 7, wobei mindestens drei Zyklen ausgeführt werden.

**9.** Das Verfahren nach einem der Ansprüche 1 bis 8, wobei die AußerMittigkeit der Mittelfläche jedes Pixels der vierten Matrix direkt proportional (IMAGE_F) dem Wert des entsprechenden Pixels der dritten Matrix ($\varphi_H$) ist.

**10.** Das Verfahren nach einem der Ansprüche 1 bis 9, wobei die Graupegelschwelle ($\alpha$) gleich 0,5 ist, bis innerhalb 10%, auf einer normalisierten Grauskala.

**11.** Das Verfahren nach einem der Ansprüche 1 bis 10, wobei die Mittelfläche jedes Pixels der vierten Matrix (IMAGE_F) elliptisch ist.

**12.** Das Verfahren nach Anspruch 11, wobei das Aspektverhältnis der elliptischen Mittelfläche jedes Pixels der vierten Matrix (IMAGE_F) gleich $\pi/2$ ist.

**13.** Das Verfahren nach einem der Ansprüche 1 bis 12, wobei die erste Schattierung der ersten Matrix (IMAGE_$G_{B\&W}$) eine minimale Schattierung ist, die zweite Schattierung der ersten Matrix (IMAGE_$G_{B\&W}$) eine maximale Schattierung ist, wobei die Lithografie vorgesehen ist zum Entfernen der opaken Schicht innerhalb der Mittelfläche eines Pixels, wenn das äquivalente Pixel der ersten Matrix (IMAGE_$G_{B\&W}$) die ersten Schattierung hat, und zur Entfernung der opaken Schicht außerhalb der Mittelfläche eines Pixels wenn das äquivalente Pixel der ersten Matrix (IMAGE_$G_{B\&W}$) die zweite Schattierung hat.

**14.** Das Verfahren nach einem der Ansprüche 1 bis 13, wobei eine minimale Größe der Mittelfläche jedes Pixels der vierten Matrix (IMAGE_F) aufgeprägt wird.

**15.** Das Verfahren nach Anspruch 14, wobei die Minimalgröße der Mittelfläche der Pixel der vierten Matrix (IMAGE_F) einen Graupegel von 0,02 für dunkele Pixelschattierungen und von 0,98 für helle Pixelschattierungen, auf einer normalisierten Grauskala, entspricht.

**Claims**

**1.** A method for integrating a synthetic hologram in a directly observable image of a scene, comprising the steps of:

defining a first image (IMAGE_G) of said scene, comprising grayscale pixels;

forming first and second matrixes from the first image, the first matrix (IMAGE_$G_{B\&W}$) comprising pixels of a first and of a second shade according to whether the corresponding pixel of the first image (IMAGE_G) has a gray level greater than or smaller than a threshold ($\alpha$), each element of the second matrix (IMAGE_G') comprising a value equal to the gray level difference between the corresponding pixel of the first image (IMAGE_G) and the corresponding pixel of the first matrix (IMAGE_$G_{B\&W}$);

forming a third pixel matrix ($\varphi_H$) by calculating the phase image of the synthetic hologram obtained by the Fourier transform of an image originating from a second source image (IMAGE_H) of the hologram;

forming a fourth pixel matrix (IMAGE_F), each pixel of the fourth matrix comprising a region internal to the pixel called central area having a surface area determined based on the corresponding pixel value of the second matrix (IMAGE_G') and off-centered with respect to the center of the pixel according to the value of the corresponding pixel of the third matrix ($\varphi_H$); and

performing a lithography of an opaque layer at the surface of a wafer according to the pattern defined by the fourth pixel matrix (IMAGE_F), the lithography being provided to remove, from a pixel, the opaque layer inside of the central area if the equivalent pixel of the first matrix (IMAGE_G$_{B\&W}$) is of the first shade and to remove the opaque layer outside of the central area if the equivalent pixel of the first matrix (IMAGE_G$_{B\&W}$) is of the second shade.

2. The method of claim 1, wherein the size of the central area of each of the pixels of the fourth matrix (IMAGE_F) is calculated from the value of the corresponding pixel of a fifth pixel matrix (IMAGE_G$_A$), each pixel of the fifth matrix (IMAGE_G$_A$) being obtained by calculation of the diffracted amplitude of an aperture defined in this pixel, the ratio of the aperture surface area to the pixel surface area being equal to the value of the corresponding element of the second matrix (IMAGE_G').

3. The method of claim 2, wherein the amplitude $A^h_{nm}$ of a pixel of the fifth matrix (IMAGE_G$_A$) depends on value $I_{nm}$ of the corresponding element of the second matrix (IMAGE_G') according to the following relation:

$$A^h_{nm} = \sqrt{\frac{I_{nm}}{2}} . J_1(\sqrt{8 I_{nm}})$$

$J_1$ being the first Bessel function.

4. The method of claim 2 or 3, wherein the third matrix ($\varphi_H$) is obtained by carrying out the steps of:

(a) calculating a sixth amplitude matrix (IMAGE_H$_A$) obtained from the second source image of the hologram (IMAGE_H) by carrying out the same steps as those enabling to obtain the fifth matrix (IMAGE_G$_A$) from the second matrix (IMAGE_G');
(b) combining the pixels of the sixth amplitude matrix (IMAGE_H$_A$) with a random phase distribution or with a continuous phase component to obtain a complex value; and
(c) calculating the phase image of the Fourier transform of said complex value.

5. The method of claim 2 or 3, wherein the third matrix ($\varphi_H$) is obtained by an optimization method taking advantage of the fifth matrix (IMAGE_G$_A$).

6. The method of claim 5, wherein the optimization method comprises:

(a) calculating a sixth amplitude matrix (IMAGE_HA) obtained from the second source image of the hologram (IMAGE_H) by carrying out the same steps as those enabling to obtain the fifth matrix (IMAGE_G$_A$) from the second matrix (IMAGE_G');
(b) combining (82) the pixels of the sixth amplitude matrix (IMAGE_H$_A$) with a random phase distribution or with a continuous component to obtain a first complex value;
(c) calculating (84) the Fourier transform of the first complex value;
(d) combining (86) the pixels of the sixth pixel matrix (IMAGE_G$_A$) with the pixels of the phase image resulting from the Fourier transform of step (c) to obtain a second complex value;
(e) calculating (88) the inverse Fourier transform of the second complex value;
(f) combining (82) the pixels of the sixth amplitude matrix (IMAGE_H$_A$) with the pixels of the phase image resulting from the calculation (88) of step (e) to obtain a new first complex value;
(g) repeating step (c) to calculate (84) the Fourier transform of the new first complex value, the third matrix ($\varphi_H$) corresponding to the phase image obtained from this last Fourier transform.

7. The method of claim 6, wherein the optimization method further comprises the repeating of steps (d) to (g), the third matrix ($\varphi_H$) corresponding to the phase image obtained at step (g) after several cycles of repeating of steps (d) to (g).

8. The method of claim 7, wherein at least three cycles are carried out.

9. The method of any of claims 1 to 8, wherein the off-centering of the central area of each pixel of the fourth matrix is directly proportional (IMAGE_F) to the value of the corresponding pixel of the third matrix ($\varphi$H).

10. The method of any of claims 1 to 9, wherein the gray level threshold ($\alpha$) is equal to 0.5, to within 10%, on a normalized grayscale.

11. The method of any of claims 1 to 10, wherein the central area of each pixel of the fourth matrix (IMAGE_F) is elliptic.

12. The method of claim 11, wherein the aspect ratio of the elliptic central area of each pixel of the fourth matrix (IMAGE_F) is equal to n/2.

13. The method of any of claims 1 to 12, wherein the first shade of the first matrix (IMAGE_$G_{B\&W}$) is a minimum shade, the second shade of the first matrix (IMAGE_$G_{B\&W}$) is a maximum shade, the lithography being provided to remove the opaque layer inside of the central area of a pixel if the equivalent pixel of the first matrix (IMAGE_$G_{B\&W}$) has the first shade and to remove the opaque layer outside of the central area of a pixel if the equivalent pixel of the first matrix (IMAGE_$G_{B\&W}$) has the second shade.

14. The method of any of claims 1 to 13, wherein a minimum size of the central area of each pixel of the fourth matrix (IMAGE_F) is imposed.

15. The method of claim 14, wherein the minimum size of the central area of the pixels of the fourth matrix (IMAGE_F) corresponds to a gray level of 0.02 for dark pixel shades and of 0.98 for light pixel shades, on a normalized grayscale.

**Fig 1**

**Fig 2**

**Fig 3**

Fig 4A

Fig 4B

Fig 5A

Fig 5B

Fig 5C

60

IMAGE_G

64

IMAGE_G$_{B\&W}$

66

IMAGE_G'

68

IMAGE_G$_A$

62

IMAGE_H

70

TF

→A$_H$

$\varphi_H$

72

74

PROCESSING

IMAGE_F

76

**Fig 6**

G'

1

$\beta = 0.5$

0

0        0.5        1

G

**Fig 8**

**Fig 7**

Fig 9

Fig 10

Fig 11

Fig 12A

Fig 12B

Fig 12C

Fig 12D

Fig 13

Fig 14A

Fig 14B

Fig 14C

Fig 14D

IMAGE_G

IMAGE_G$_A$

$\varphi_H$

IMAGE_F'

IMAGE_F

**Fig 15**

**Fig 16A**

**Fig 16B**

**Fig 16C**

Fig 17A

Fig 17C

Fig 17B

Fig 17D

Fig 18

Fig 19

## RÉFÉRENCES CITÉES DANS LA DESCRIPTION

**Littérature non-brevet citée dans la description**

- **JOSEPH ROSEN ; BAHRAM JAVIDI.** Hidden images in halftone pictures. *Appl. Opt.,* vol. 40 (20), 3346-3353

- **GERCHBERG ; SAXTON.** A pratical algorithm for the determination of the phase from image and diffraction plane pictures. *Optik,* vol. 35, 237-246